Europäisches Patentamt

European Patent Office

Office européen des brevets

(11) Veröffentlichungsnummer: **0 256 506 B1**

## EUROPÄISCHE PATENTSCHRIFT

(45) Veröffentlichungstag der Patentschrift: **04.11.92**

(21) Anmeldenummer: **87111669.5**

(22) Anmeldetag: **12.08.87**

(51) Int. Cl.⁵: **H04L 25/00**

(54) **Übertragungseinrichtung mit symmetrischen Leitungen.**

(30) Priorität: **14.08.86 DE 3627603**

(43) Veröffentlichungstag der Anmeldung:
**24.02.88 Patentblatt 88/08**

(45) Bekanntmachung des Hinweises auf die
Patenterteilung:
**04.11.92 Patentblatt 92/45**

(84) Benannte Vertragsstaaten:
**AT BE CH DE FR GB IT LI**

(56) Entgegenhaltungen:

**INTERNATIONAL CONFERENCE ON COMM-
UNICATIONS, Band 1, 10.-14. Juni 1979, Seiten 2.1.1 - 2.1.7, IEEE, Boston, US; R.K. EVEN
et al.: "Digital transmission capability of the
loop plant"**

**E.D.N. ELECTRICAL DESIGN NEWS, Band 30,
Nr. 6, März 1985, Seiten 181-186,188, Boston,
US; D. PIPPENGER: "ICs extend RS-422 to
multistation applications"**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Hegenbart, Waldemar c/o GRUNDIG
E.M.V.
Max Grundig Holländ Stiftung & Co KG
Kurgartenstrasse 37 D-8510 Fürth/Bay(DE)**
Erfinder: **Brune, Frank
Grabenstrasse 33
W-7533 Tiefenbronn 3(DE)**

## Beschreibung

Die Erfindung betrifft eine Übertragungseinrichtung mit symmetrischen Leitungen für den Dialog zwischen datenverarbeitenden Geräten, deren Ein- und/oder Ausgänge asymmetrisch ausgelegt und mittels Übertrager an das symmetrische Leitungsnetz angepaßt sind.

Derartige Übertragungseinrichtungen sind bekannt und haben den Vorteil, daß für die Übertragung ein häufig schon vorhandenes symmetrisches Leitungsnetz genutzt werden kann. Die mit ihnen erzielbaren Übertragungseigenschaften, insbesondere was die überbrückbare Entfernung zwischen den datenverarbeitenden Geräten anbelangt, sind allerdings noch nicht befriedigend. Ein Ausweichen auf ein asymmetrisches Koax-Netz ist daher oft notwendig, zumal die zu verbindenden Geräte ohnehin mit asymmetrischen Ein- und/oder Ausgängen ausgestattet sind. Der mit der Installation eines separaten Koax-Netzes verbundene Kostenaufwand ist jedoch beträchtlich.

Aus dem Artikel "Digital transmission capability of the loop plant ", von R. K. Even et al., aus International Conference on Communications, band 1, 10.-14. Juni 1979, Seiten 2.1.1 - 2.1.7, IEEE, Boston, US ist ein Duplex-Übertragungssystem bekannt, bei dem auf symmetrischen Leitungen eine Datenübertragung in zwei Richtungen erfolgt, wobei folgende drei Möglichkeiten der Datenübertragung angegeben sind:
- (1) Die gleichzeitige Übertragung in beide Übertragungsrichtungen,
- (2) Zeitmultiplexübertragung, und
- (3) Frequenzmultiplexübertragung.

Der Erfindung liegt die Aufgabe zugrunde, eine Übertragungseinrichtung der im Oberbegriff des Anspruchs 1 angegebenen Art so auszubilden, daß ein symmetrisches Leitungsnetz genutzt werden kann, ohne daß Nachteile bezüglich der Übertragungseigenschaften in Kauf genommen werden müssen.

Diese Aufgabe wird gemäß der Erfindung durch die im Kennzeichen des Patentanspruchs 1 angegebenen Merkmale gelöst. Vorteilhafte Ausgestaltungen der Erfindung sind in den Unteransprüchen gekennzeichnet.

Die Übertragungseinrichtung gemäß der Erfindung bietet insbesondere für den Anwender Vorteile, der bei der Einführung eines Datenverarbeitungssystems noch keine konkreten Aussagen über dessen endgültige Struktur treffen kann. Durch die Nutzung eines häufig bereits vorhandenen symmetrischen Leitungsnetzes kann die Installation eines Datenverarbeitungssystems jedoch ohne großen Aufwand und nahezu ohne Einschränkungen bezüglich des Aufstellungsortes der Geräte vorgenommen werden.

Bei der Übertragungseinrichtung gemäß der Erfindung sind an den asymmetrischen Ein- und/oder Ausgängen der Datenverarbeitungsgeräte in vorteilhafter Weise Steuervorrichtungen vorgesehen, die die bei Sende- und und Empfangsbetrieb jeweils vorliegenden Signalflußrichtungen feststellen, ohne hierbei die gesendeten oder empfangenen Signale selbst zu beeinflussen. In Abhängigkeit von der festgestellten Signalflußrichtung werden dann die für die jeweilige Betriebsart (Senden oder Empfangen) erforderlichen Umschaltvorgänge gesteuert. Ferner sind im jeweiligen Empfangszweig zwischen der Steuervorrichtung und dem symmetrischen Leitungsnetz eine Entzerrerschaltung sowie eine Anpassungsschaltung mit hoher Rückflußdämpfung angeordnet. Im jeweiligen Sendezweig ist zwischen der Steuervorrichtung und dem symmetrischen Leitungsnetz in vorteilhafter Weise eine Verzögerungsschaltung vorgesehen, um Informationsverluste des gesendeten Signals am Datenanfang zu vermeiden. Die Anpassungs- und Verzögerungsschaltungen verfügen gegebenenfalls noch über zusätzliche Signalverstärker, um die überbrückbare Streckenlänge der Übertragungseinrichtung zu vergrößern.

Bei einer bevorzugten Ausführungsform der Übertragungseinrichtung gemäß der Erfindung ist als Steuervorrichtung ein primärseitig in den Signalweg geschalteter Übertrager vorgesehen, der mit einem Summierverstärker so gekoppelt ist, daß die Primärwicklung, die von Sende- und Empfangssignal in entgegengesetzten Richtungen durchlaufen wird, an einen ersten Eingang des Summierverstärkers, und die Sekundärwicklung an einen zweiten Eingang des Summierverstärkers liegt. Der verwendete Übertrager weist primärseitig nur so viele Windungen auf, daß die Dämpfung der ihn durchlaufenden Sende- und Empfangssignale vernachlässigbar klein ist.

Die Erfindung ist im folgenden anhand von Zeichnungen näher erläutert. Es zeigen:

Fig. 1    ein Blockschaltbild der Übertragungseinrichtung gemäß der Erfindung,

Fig. 2    die Steuervorrichtung gemäß der Erfindung zur Richtungserkennung des Signalflusses und zur Steuerung der Sende-/Empfangsumschaltung.

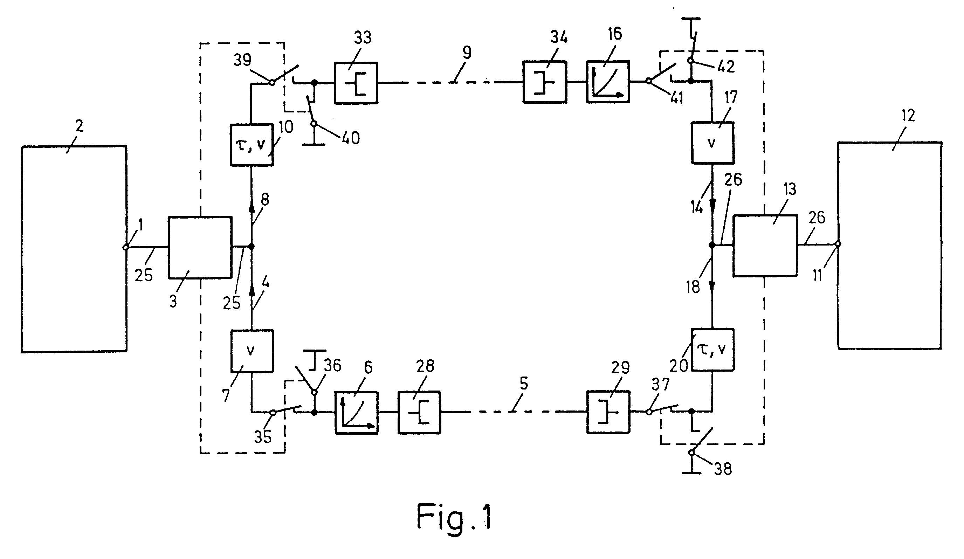

Die Übertragungseinrichtung nach Fig. 1 besteht aus zwei identischen Sende-/Empfangszweigen, über die der Dialog zwischen zwei datenverarbeitenden Geräten 2 und 12 erfolgt. An den asymmetrischen Ein- und Ausgängen 1 bzw. 11 dieser Geräte liegt jeweils eine Steuervorrichtung 3, 13, die durch Auswertung der Signalflußrichtung feststellt, ob an den Anschlüssen 1 und 11 ein Sende- oder ein Empfangssignal vorliegt. Entsprechend erfolgt dann die Steuerung der elektronischen Sende-/Empfangsumschalter 35, 36, 37, 38, 39, 40, 41 und 42. In der gezeigten Schalterstellung sendet das Gerät 12 einen Datensatz aus, während das Gerät 2 diesen Datensatz empfängt. Um während der Umschaltvorgänge Informationsverluste am Datenanfang zu vermeiden, durchläuft das jeweils gesendete Signal 18, 8 eine Verzögerungsschaltung 20, 10, die bevorzugt so ausgelegt ist, daß das verzögerte Signal zusätzlich um einen Faktor v verstärkt wird. Anschließend gelangt das bei jeweiligem Sendebetrieb verzögerte und verstärkte Signal an einen Übertrager 29 bzw. 33, der die bis dahin asymmetrisch ausgeführte Leitungsstruktur an ein symmetrisches Leitungsnetz 5 bzw. 9 anpaßt.

Auf der jeweiligen Empfangsseite ist gleichfalls ein Übertrager 28 bzw. 34 vorgesehen, der den Übergang vom symmetrischen Leitungsnetz 5, 9 auf eine asymmetrische Leitungsstruktur bildet. Das durch das symmetrische Leitungsnetz gedämpfte Datensignal durchläuft dann zur empfängerseitigen Regeneration eine Entzerrerschaltung 6, 16 sowie eine Anpassungsschaltung 7, 17, die eine hohe Rückflußdämpfung aufweist und in einer bevorzugten Ausführungsform das zu regenerierende Datensignal noch um einen Faktor v verstärkt.

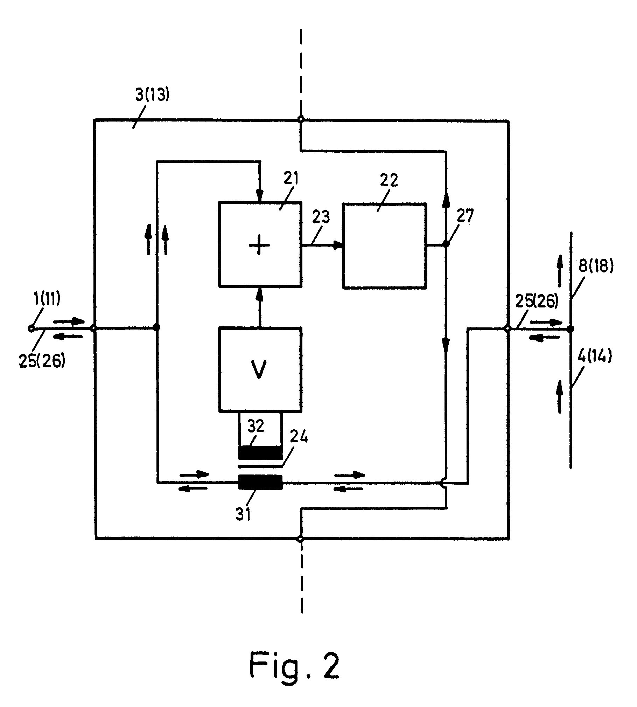

Fig. 2 zeigt eine besonders vorteilhafte Ausführungsform der Steuervorrichtung 3, 13 zur Richtungserkennung des Signalflusses für eine Übertragungseinrichtung gemäß der Erfindung. Hierbei ist in den zum datenverarbeitenden Gerät 2, 12 führenden Signalweg 25, 26, den sowohl das Sendeals auch das Empfangssignal durchläuft, die Primärwicklung 31 eines Übertragers 24 geschaltet, deren Windungszahl so gewählt ist, daß die Dämpfung der sie gegensinnig durchlaufenden Sende- und Empfangssignale vernachlässigbar klein ist. Das am Übertrager 24 sekundärseitig abgreifbare Sende- bzw. Empfangssignal wird, gegebenenfalls verstärkt, dem ersten Eingang eines Summiergliedes 21 zugeführt. Der zweite Eingang des Summiergliedes 21 ist an den Signalzweig 25 bzw. 26 angeschlossen.

Durch derartige Schaltungsmaßnahmen wird erreicht, daß an den beiden Eingängen des Summiergliedes 21 bei Sendebetrieb gleichphasige und bei Empfangsbetrieb gegenphasige Signale anliegen. Demzufolge ergibt sich am Ausgang 23 des Summiergliedes bei Sendebetrieb durch gleichphasige Summation der am Summierglied liegenden Sendesignale ein erstes Steuersignal und bei Empfangsbetrieb durch gegenphasige Summation (= Subtraktion) der am Summierglied liegenden Empfangssignale ein zweites Steuersignal, dessen Amplitude wesentlich kleiner ist als die des ersten. Über eine Schaltstufe 22, die z. B. aus einem Monoflop bestehen kann, wird ein zwei Schaltpegel aufweisendes Schaltsignal erzeugt, das über die elektronischen Schalter 35, 36, 37, 38, 39, 40, 41 und 42 die Sende-/Empfangsumschaltung entsprechend des festgestellten Signalflusses steuert.

Das erläuterte Ausführungsbeispiel ist so ausgelegt, daß für den Sende- und Empfangsbetrieb getrennte symmetrische Leiterpaare 5, 9 benötigt werden. Es ist jedoch durch geeignete Umschaltmaßnahmen auch möglich für Sende- und Empfangsbetrieb nur ein symmetrisches Leiterpaar vorzusehen.

**Patentansprüche**

1. Übertragungseinrichtung mit symmetrischen Leitungen für den Dialog zwischen datenverarbeitenden Geräten, deren Ein- und/oder Ausgänge asymmetrisch ausgelegt und mittels Übertrager an das symmetrische Leitungsnetz angepaßt sind, **dadurch gekennzeichnet,** daß an den asymmetrischen Ein- und/oder Ausgängen (1, 11) der Datenverarbeitungsgeräte (2, 12) Steuervorrichtungen (3, 13) vorgesehen sind, die die bei Sende- und Empfangsbetrieb jeweils vorliegenden Signalflußrichtungen, ohne die gesendeten oder empfangenen Signale selbst zu beeinflussen, feststellen, und die abhängig hiervon die für die jeweilige Betriebsart erforderlichen Umschaltvorgänge steuern, und daß im jeweiligen Empfangszweig (4, 14) zwischen der Steuervorrichtung (3, 13) und dem symmetrischen Leitungsnetz (5, 9) eine Anpassungsschaltung (7, 17) mit hoher Rückflußdämpfung und im jeweiligen Sendezweig (8, 18) zwischen der Steuervorrichtung (3, 13) und dem symmetrischen Leitungsnetz (9, 5) eine Verzögerungsschaltung (10, 20) angeordnet sind.

2. Übertragungseinrichtung nach Anspruch 1, **dadurch gekennzeichnet,** daß als Steuervorrichtung (3, 13) ein primärseitig in den Signalweg (25, 26) geschalteter Übertrager (24) vorgesehen ist, der mit einem Summierverstärker (21) so gekoppelt ist, daß die Primärwicklung (31), die von Sende- und Empfangssignal in entgegengesetzten Richtungen durchlaufen wird, an einem ersten Eingang des Summierverstärkers, und die Sekundärwicklung (32) an einem zweiten Eingang des Summierverstärkers liegt.

3. Übertragungseinrichtung nach Anspruch 2, **dadurch gekennzeichnet,** daß der verwendete Übertrager (24) primärseitig nur so viele Windungen aufweist, daß die Dämpfung der ihn durchlaufenden Sende- und Empfangssignale vernachlässigbar klein ist.

4. Übertragungseinrichtung nach einem oder mehreren der Ansprüche 1 bis 3, **dadurch gekennzeichnet,** daß sowohl im Empfangszweig (4, 14) als auch im Sendezweig (8, 18) eine Verstärkerschaltung angeordnet ist.

5. Übertragungseinrichtung nach einem oder mehreren der Ansprüche 1 bis 4, dadurch **gekennzeichnet,** daß für den Sende- und Empfangsbetrieb getrennte symmetrische Leiterpaare vorgesehen sind.

6. Übertragungseinrichtung nach einem oder mehreren der Ansprüche 1 bis 4, **dadurch gekennzeichnet,** daß für den Sende- und Empfangsbetrieb ein gemeinsames symmetrisches Leiterpaar vorgesehen ist.

**Claims**

1. Transmission device having balanced lines for dialogue between data processing units whose inputs and/or outputs are designed in an unbalanced fashion and are matched by means of transformers to the balanced network, characterised in that there are provided at the unbalanced inputs and/or outputs (1, 11) of the data processing units (2, 12) control devices (3, 13) which determine the signal flow directions respectively present in transmit mode and receive mode without thereby influencing the transmitted or received signals themselves, and which dependently hereof control the changeover operations required for the respective mode of operation, and in that a matcher circuit (7, 17) with high return loss is arranged in the respective receiving branch (4, 14) between the control device (3, 13) and the balanced network (5, 9), and a delay circuit (10, 20) is arranged in the respective transmitting branch (8, 18) between the control device (3, 13) and the balanced network (9, 5).

2. Transmission device according to Claim 1, characterised in that the control device (3, 13) is provided as a transformer (24) which is connected on the primary side in the signal path (25, 26) and is coupled to a summing amplifier (21) in such a way that the primary winding (31), which is traversed in opposite directions by the transmitted and received signals, is connected to a first input of the summing amplifier, and the secondary winding (32) is connected to a second input of the summing amplifier.

3. Transmission device according to Claim 2, characterised in that the transformer (24) used has on the primary side only so many turns that the attenuation of the transmitted and received signals traversing it is negligibly small.

4. Transmission device according to one or more of Claims 1 to 3, characterised in that an amplifier circuit is arranged both in the receiving branch (4, 14) and in the transmitting branch (8, 18).

5. Transmission device according to one or more of Claims 1 to 4, characterised in that separate balanced wire pairs are provided for the transmit mode and receive mode.

6. Transmission device according to one or more of Claims 1 to 4, characterised in that a common balanced wire pair is provided for the transmit mode and receive mode.

**Revendications**

1. Dispositif de transmission à lignes symétriques pour le dialogue entre des appareils de traitement de données, dont les entrées et/ou les sorties sont agencées de façon dissymétrique et sont adaptées, au moyen de transformateurs, au réseau symétrique de lignes, caractérisé en ce qu'au niveau des entrées et/ou sorties dissymétriques (1,11) des appareils de traitement de données (2,12), il est prévu des dispositifs de commande (3,13), qui déterminent les directions de flux de signaux, qui sont respectivement présentes lors du fonctionnement à l'émission et du fonctionnement à la réception, sans influencer les signaux émis ou reçus eux-mêmes, et qui, en fonction de cela, commandent les processus de commutation nécessaires pour le type de fonctionnement respectif, et qu'un circuit d'adaptation (7,17) possédant un fort affaiblissement des courants réfléchis est disposé dans la branche respective de réception (4,14) entre le dispositif de commande (3,13) et le réseau symétrique de lignes (5,9) et qu'un circuit de retardement (10,20) est disposé dans la branche respective d'émission (8,18) entre le dispositif de commande (3,13) et le réseau symétrique de lignes (9,5).

2. Dispositif de transmission selon la revendication 1, caractérisé en ce qu'il est prévu, comme dispositif de commande (3,13), un transformateur (24), qui est branché, côté primaire, dans la voie (25,26) de transmission des signaux et est couplé à un amplificateur additionneur (21) de telle sorte que l'enroulement primaire (31), qui est parcouru par le signal d'émission et le signal de réception en des sens opposés, est raccordé à une première entrée de l'amplificateur additionneur et que l'enroulement secondaire (32) est raccordé à une seconde entrée de l'amplificateur additionneur.

3. Dispositif de transmission selon la revendication 2, caractérisé en ce que le transformateur utilisé (24) possède, côté primaire, un nombre de spires juste suffisant pour que l'affaiblissement des signaux d'émission et de réception, qui le traversent, soit négligeable.

4. Dispositif de transmission selon une ou plusieurs des revendications 1 à 3, caractérisé en ce qu'un circuit amplificateur est branché aussi bien dans la voie de réception (4,14) que dans la voie d'émission (8,18).

5. Dispositif de transmission selon une ou plusieurs des revendications 1 à 4, caractérisé en ce que des couples symétriques séparés de conducteurs sont prévus pour le fonctionnement à l'émission et le fonctionnement à la réception.

6. Dispositif de transmission selon une ou plusieurs des revendications 1 à 4, caractérisé en ce qu'un couple symétrique commun de conducteurs est prévu pour le fonctionnement à l'émission et le fonctionnement à la réception.

Fig.1

Fig. 2